# EUROPÄISCHE PATENTANMELDUNG

(11) **EP 3 633 596 A1**
(43) Veröffentlichungstag der Anmeldung: **08.04.2020**
(21) Anmeldenummer: 18000680.1
(22) Anmeldetag: 02.10.2018
(51) Int. Cl.: G06Q 50/30, G06F 21/73, G06K 19/06

(54) **VERFAHREN ZUR IDENTIFIZIERUNG, ECHTHEITSÜBERPRÜFUNG UND NACHVERFOLGUNG VON PRODUKTVERPACKUNGEN**

(71) Anmelder: Constantia Pirk GmbH & Co. KG, 92712 Pirk (DE)
(72) Erfinder: Reich, Peter, 92721 Störnstein (DE); Rittner, Tanja, 92729 Weiherhammer (DE)
(74) Vertreter: Bittner, Bernhard

(57) **Zusammenfassung**

Die Erfindung betrifft ein Verfahren zur Identifizierung, Echtheitsüberprüfung und Nachverfolgung von Produktverpackungen, die mit mindestens einem Sicherheitsmerkmal versehen sind, das die Identifizierung, Authentifizierung und Nachverfolgung der Produktverpackung durch ein Endbenutzergerät ermöglicht.

## Beschreibung

Die Erfindung betrifft ein Verfahren zur Identifizierung, Echtheitsüberprüfung und Nachverfolgung von Produktverpackungen und damit gleichzeitig den darin verpackten Produkten.

Mobile persönliche Kommunikationsgeräte, wie etwa Smartphones oder Tablet-Computer, bieten dem Benutzer im Alltag zahlreiche neue Anwendungsmöglichkeiten. Beispielsweise können zu Objekten, die mit einer Kamera des mobilen Geräts aufgenommen werden, über eine Internetabfrage schnell ergänzende Informationen abgerufen werden, die etwa von Produktanbietern bereitgestellt werden.
Beispielsweise offenbart US7734729 Verfahren zum Abrufen von Produktinformationen von einem Server, wobei ein Produkt vor Ort mit einem Smartphone aufgenommen und durch Bildauswertung, gegebenenfalls durch Auswertung eines Barcodes, erkannt wird. Dem Benutzer werden dann Informationen zu dem Produkt angezeigt. Zusätzlich werden Daten zur Benutzung des Systems in einer Datenbank mit dem Benutzer verknüpft gespeichert, um sein Kaufverhalten auszuwerten.

EP2973213 A1 offenbart beispielsweise Verfahren und Vorrichtungen mit denen ein in einem Videobild aufgenommenes Objekts erkannt und anhand von Objektattributen (insb. einer Markierung) identifiziert wird. Auf Basis des identifizierten Objekts wird automatisch eine Anwendung gestartet, die eine Augmented-Reality-Darstellung über das von der Smartphone Kamera aufgezeichnete Bild überlagert.

Auch wenn solche Systeme für den Benutzer selbst nur mit einem geringen Aufwand verbunden sind, ist der Aufwand für das dahinterliegende technische System sehr groß. So haben kleinere und mittelgroße Anbieter von Alltagsprodukten, beispielsweise Lebensmittelprodukten, Haushaltswaren, Kosmetikprodukten oder anderen Konsumgütern, oftmals nicht die technischen Kenntnisse, die fachspezifischen Mitarbeiter und die technische Infrastruktur, um vergleichbare Systeme und Verfahren in die Praxis umzusetzen, auch wenn Sie die großen Vorteile, die damit verbunden wären, sehr wohl erkennen.

Andererseits sind Hersteller von Produkten, auch verpackten Produkten, wie beispielsweise Lebensmittelprodukten, Kosmetikprodukten, Elektronikprodukten, Pharmaprodukten, Konsumgütern immer wieder mit Produkt- und Markenpiraterie konfrontiert.

Aufgabe der Erfindung ist, ein Verfahren und Vorrichtungen bereitzustellen, mit denen eine Produktverpackung durch ein individuelles Sicherheitsmerkmal identifiziert und deren Echtheit überprüft werden kann, wobei die im Sicherheitsmerkmal hinterlegten Informationen auch die Nachverfolgung der Produktverpackung erlauben.
Gleichzeitig sollen die technischen Hürden, die mit der Bereitstellung und insbesondere der Authentifizierung des Sicherheitsmerkmals und damit der Nachverfolgung der das Sicherheitsmerkmal aufweisenden Produkts bzw. der Produktverpackung verbunden sind, für den Produktanbieter minimiert werden.

Diese Aufgabe wird erfindungsgemäß durch ein Verfahren gelöst, das folgende Schritte aufweist:
a) Herstellen von Verpackungsmaterial für zumindest eine Produktverpackung, die mit einem Sicherheitsmerkmal versehen werden kann,
b) Ausgestalten des Verpackungsmaterials an zumindest einem für die Herstellung der Produktverpackung vorgesehenen Bereich des Verpackungsmaterials mit zumindest einem Sicherheitsmerkmal, das die Identifizierung, Authentifizierung und Nachverfolgung der Produktverpackung durch ein Endbenutzergerät ermöglicht, wobei das Sicherheitsmerkmal ein für den Produktanbieter individualisiertes fraktales Halbtonbild mit Produktidentifikationsdaten, wie Informationen über zumindest die Identität, Authentizität, sowie Informationen über den bestimmungsgemäßen Produktlauf, darstellt;
c) Bereitstellen des Verpackungsmaterials zur Fertigstellung der Produktverpackung und Befüllung durch einen Produktanbieter;
d) Speichern der mit der Produktverpackung verknüpften Produktidentifikationsdaten in einer Produktdatenbank eines Computersystems;
e) Bereitstellen einer Produktanbieterschnittstelle zu dem Computersystem, über welche dem Produktanbieter ein Zugriff auf eine Konfigurationsumgebung für das Sicherheitsmerkmal ermöglicht wird;
e) Anpassen zumindest des für den Produktanbieter konfigurierten Sicherheitsmerkmals für eine Verwendung durch das Endbenutzergerät;

Bereitstellen eines von dem Endbenutzergerät ausführbaren Computerprogrammprodukts zum Herunterladen von dem Computersystem auf das Endbenutzergerät, wobei das auf dem Endbenutzergerät ausgeführte Computerprogrammprodukt dem Endbenutzergerät die folgenden Schritte ermöglicht:
f) Identifizieren der Produktverpackung, wenn sich das Sicherheitsmerkmal in einem Auslesebereich des Endbenutzergerätes befindet,
g) Ermitteln und gegebenenfalls Herunterladen des für die identifizierte Produktverpackung bereitgestellten Sicherheitsmerkmals,
h) Detektieren eines an der fertiggestellten Produktverpackung sichtbaren Darstellungsbereichs der Produktverpackung in einem mit einer Kamera des

Endbenutzergeräts aufgenommenen Aufnahmebild, wenn sich die Produktverpackung im Aufnahmebereich der Kamera befindet,
i) Überlagern des mit der Kamera des Endbenutzergeräts aufgenommenen Aufnahmebildes mit dem Sicherheitsmerkmal
   und
j) Vergleich und Abgleich des Aufnahmebildes mit den gespeicherten Informationen des Sicherheitsmerkmals.

Die beschriebene Reihenfolge, in der die einzelnen Schritte ausgeführt werden, ist für das erfindungsgemäße Verfahren nur insofern bindend, soweit ein Schritt eine zwingende Voraussetzung für einen nachfolgenden Schritt darstellt. Ansonsten können die einzelnen Schritte auch in einer anderen Reihenfolge oder gegebenenfalls gleichzeitig ausgeführt werden.

Das Verpackungsmaterial kann ein beliebiges bedruckbares, festes oder flexibles Verpackungsmaterial sein, beispielsweise ein Folienmaterial, ein formfestes Material, wie etwa Trays, Becher, Blisterverpackungen, oder ähnliches, ein Schaumstoff enthaltendes Verpackungsmaterial, Papier- und Kartonmaterial, Holz, sowie Verbundstoffe und Kombinationen solcher Materialen.
Das Verpackungsmaterial kann vom Inhaber bzw. Anbieter des Computersystems oder von Dritten hergestellt werden.

Das Sicherheitsmerkmal stellt erfindungsgemäß ein fraktales Halbtonbild dar, das berührungslos maschinengestützt auslesbar ist und vorteilhafterweise in eine Verpackungsbedruckung im Darstellungsbereich gegebenenfalls sichtgeschützt eingebettet ist. Solch ein Sicherheitsmerkmal lässt sich im üblichen Druckverfahren mit bekannten Mitteln erzeugen und kann mit bekannten Verfahren erkannt werden. Im Falle eines sichtgeschützt eingebetteten Sicherheitsmerkmals wird das Gestaltungsbild der Produktverpackung nicht negativ beeinflusst, da das Sicherheitsmerkmal mit freiem Auge nicht oder kaum wahrgenommen wird.
Verfahren und Vorrichtungen zum Erstellen, gegebenenfalls Einbetten in den Darstellungsbereich und Auslesen derartiger Druckobjekte sind dem Fachmann bekannt. Entsprechende Systeme werden beispielsweise von der Firma Digimarc Corporation, Beaverton, OR 97008 USA, angeboten.

Das fraktale Halbtonbild wird vorzugsweise aus einem Motiv bzw. aus einem Bild erstellt. Dadurch können individuelle Motive je nach Kundenwunsch verarbeitet werden.
Besonders vorteilhaft kann das fraktale Halbtonbild aus einer Darstellung oder einem Bild des verpackten Produkts hergestellt werden. So kann beispielsweise bei einer Lebensmittelverpackung, beispielsweise einer Verpackung von Erdnüssen das fraktale Halbtonbild aus einem Bild von mehreren zufällig angeordneten Erdnüssen erstellt werden.

Zur Herstellung eines fraktalen Halbtonbildes werden zwei Schwellenwerte definiert, einerseits die Obergrenze zur Volltondarstellung_{[RP1]}, bevorzugt 80 - 100 % des Tonwerts, andererseits die Untergrenze zu weiß_{[RP2]}, bevorzugt 0 - 15 % des Tonwerts..
Die Schwellenwerte sind abhängig von der Sättigung des Bildinhalts, insbesondere von der Ausprägung des Schwarzkanals.
Die Wahl des Schwellenwertes ist auch wesentlich vom gewählten Motiv abhängig. Im Allgemeinen wird er vorteilhafterweise in jenen Bereich gelegt, in dem die Hauptmodulation zu finden ist.
Ferner wird die Linienstärke für das fraktale Halbtonbild, das endgültig dann in Form eines Strichbildes vorliegt, definiert.
Üblicherweise erweisen sich Linienstärken von etwa 0.006 mm bis etwa 0,04 mm als zweckmäßig.

Aus diesen Parametern wird in der elektronischen Bildverarbeitung ein entsprechendes Datenfile mit dem zu druckenden Elementen erstellt, wobei für die Darstellung eines fraktalen Halbtonbildes, die Halbtondarstellung in eine Strichdarstellung überführt wird.

Durch die gewählten Parameter, insbesondere einerseits durch die Auswahl des Motivs und andererseits durch die individuelle Festlegung der Schwellenwerte, können individuelle fraktale Halbtonbilder erstellt werden, die dann für eine bestimmte Verpackung eines definierten Produkts einzigartig sind.

Insbesondere werden dem als Sicherheitsmerkmal konfigurierten Halbtonbild durch die individuelle Auswahl des Motivs und die individuelle Festlegung der Schwellenwerte produkt- und herstellerbezogene Daten, wie Art des Produkts, Produktlauf, wie beispielsweise autorisiertes Land des Inverkehrbringens, zugeordnet.
Bei hochwertigen und hochpreisigen Produkten oder Produkten aus dem pharmazeutischen Bereich bietet es sich auch an, beispielsweise das Herstellungs- oder Ablaufdatum im Sicherheitsmerkmal zu codieren. Diese Codierung kann in einem Verfahrensschritt, aber auch in einem getrennten Verfahrensschritt erfolgen. Erfolgt diese Codierung in einem getrennten Verfahrensschritt, so hat dies den Vorteil, dass von Verpackungsmaterialien, die im Sicherheitmerkmal, dem fraktalen Halbtonbild, vorerst lediglich die Basisdaten, wie Art des Produkt, Hersteller des Produkts, Informationen über Allergene und dergleichen aufweisen, größere Mengen hergestellt werden können und anschließend durch variable Daten, wie beispielsweise Ablaufdatum und/oder Herstellungsdatum Chargennummer, individualisiert werden können.

Dadurch wird eine erhöhte Fälschungssicherheit erzielt, das fraktale Halbtonbild ist dann eindeutig, beispielsweise einer definierten Verpackung für ein definiertes Produkt, das für einen bestimmten Produktlauf bestimmt ist, zuordenbar.

Die Wahl des Schwellenwertes ist auch wesentlich vom gewählten Motiv abhängig. Im Allgemeinen wird er vorteilhafterweise in jenen Bereich gelegt, in dem die Hauptmodulation zu finden ist.

Der Nachweis einer Fälschung des fraktalen Halbtonbildes kann auf einfache Weise erfolgen. Das fraktale Bild wird mit einem Scanner, wie beispielsweise der Kamera eines Smartphones eingescannt und die Pixel dieses Bild mit den Pixel des Originalbilds mittels einer üblichen Vergleichssoftware, wie beispielsweise Esko Graphics Viewer, Global Vision, EyeC, Gradient Pixelproof oder dergleichen verglichen.
Bei einer Übereinstimmung von üblicherweise > 80 % kann von der Authentizität des Bildes ausgegangen werden, bei einer Übereinstimmung von < 80% liegt mit einiger Wahrscheinlichkeit eine Fälschung vor.

Ferner kann durch das als Sicherheitsmerkmal konfigurierte fraktale Halbtonbild durch Vergleich der dem Sicherheitsmerkmal hinterlegten produkt- und/oder herstellbezogenen Informationen festgestellt werden, ob beispielsweise der Produktlauf korrekt ist, ob beispielsweise das Produkt in einem im Produktlauf vorgesehenen Land in Verkehr gebracht worden ist, aus welcher Charge das Produkt stammt.

Dadurch lassen sich beispielsweise Verfahren zum Qualitätsmanagement bis in den Bereich des Endkunden ausdehnen, indem einzelne Produkte oder Produktchargen vom Endverbraucher nachgeprüft werden können.

Alternativ oder zusätzlich kann zumindest ein berührungslos maschinengestützt auslesbares Identifikationsobjekt ein über eine Funkfrequenz auslesbarer Transponder sein. Dazu kann beispielsweise die Produktverpackung mit einem RFID-Etikett oder einem anderen Funkelement versehen sein, welches einen Produktcode codiert und von dem Endbenutzergerät berührungslos auslesbar ist. In einer vorteilhaften Ausführungsform kann der Schritt des Identifizierens der Produktverpackung einen Vergleich mit zumindest einem Referenzbild der Produktverpackung und/oder des Identifikationsobjekts umfassen. Entsprechende Referenzbilder können beispielsweise bei App Start heruntergeladen und temporär am Endgerät gespeichert werden. Systeme, die eine mit einer Kamera aufgenommenes Objekt, in diesem Fall eine Produktverpackung, anhand eines Vergleichs mit einem Referenzbild erkennen, sind im Stand der Technik bekannt.

In einer vorteilhaften Ausführungsform kann erfindungsgemäß bei der Herstellung des Verpackungsmaterials an dem für die Herstellung der Produktverpackung vorgesehenen Bereich des Verpackungsmaterials zumindest eine Positionsmarke erzeugt werden, die im Darstellungsbereich der fertiggestellten Produktverpackung angeordnet ist. Die Positionsmarke erleichtert die Ermittlung der Position der Produktverpackung relativ zur Kamera bzw. zu, Scanner und damit die richtig positionierte Überlagerung der Produkterweiterung über das Aufnahmebild.
Als "an dem für die Herstellung der Produktverpackung vorgesehenen Bereich des Verpackungsmaterials" wird der Bereich eines (beispielsweise in Rollen oder Bögen bereitgestellten) Verpackungsmaterials bezeichnet, der tatsächlich einen Bestandteil der fertigen Produktverpackung bildet. Das Verpackungsmaterial umfasst dabei im Allgemeinen zahlreiche einzelne Bereiche, die beispielsweise in der Verpackungsanlage zu einzelnen Produktverpackungen zugeschnitten werden.

Das Computerprogrammprodukt kann in vorteilhafter Weise für das Endbenutzergerät über die Konfigurationsumgebung vom Produktanbieter konfigurierbar sein. Damit kann dem Produktanbieter die Möglichkeit geboten werden, das Verhalten des Computerprogrammprodukts auf dem Endbenutzergerät zumindest im Zusammenhang mit dem Sicherheitsmerkmal zu beeinflussen. Beispielsweise kann dem Produktanbieter die Möglichkeit geboten werden zu definieren, welche Funktionalitäten des Sicherheitsmerkmals dem Benutzer im Zusammenhang mit den eigenen Produkten bereitgestellt werden sollen.

In vorteilhafter Weise können vorzugsweise über die Konfigurationsumgebung Computerprogrammprodukttemplates für das Endbenutzergerät vom Produktanbieter auswählbar und konfigurierbar sein. Dadurch kann der Produktanbieter auf einfache Weise ein einzigartiges für den Benutzer herunterladbares Computerprogrammprodukt erstellen, das vom Benutzer werbewirksam als Produkt des Produktherstellers wahrgenommen wird.
Der Produktanbieter braucht dabei lediglich durch das Computerprogrammprodukttemplate vorgegebene Parameter, Darstellungsoptionen und Funktionalitäten auswählen bzw. definieren. Das Computersystem erstellt dann auf dieser Basis das Computerprogrammprodukt, gegebenenfalls auch in mehreren Varianten für unterschiedliche Endbenutzergeräte bzw. Betriebssysteme. Das Computersystem kann gegebenenfalls dieses Computerprogrammprodukt dann über vordefinierte Schnittstellen an eine oder mehrere von Betriebssystem- oder Endbenutzergerät-Anbietern bereitgestellte Infrastruktur (bekannte Beispiele dafür sind etwa die App-Stores von Android- oder Apple-Smartphones) automatisch weiterleiten.

In einer weiteren vorteilhaften Ausführungsform kann das Computersystem eine Benutzerdatenbank aufweisen, in der Daten des Endbenutzergeräts, Daten des Benutzers des Endbenutzergeräts und/oder Verwendungsdaten des Endbenutzergeräts bzw. des Computerprogrammprodukts und gegebenenfalls mit dem Benutzer und/oder dem Endbenutzergerät verknüpfte Daten aus anderen Quellen gespeichert und verwaltet werden.
Dies erlaubt einerseits eine effektive Kommunikation mit den Benutzern, andererseits stellen die gesammelten Daten einen über das System generierten Wert dar, der in vielfältiger Weise genutzt und/oder Dritten zur Verfügung gestellt werden kann.
Beispielsweise können die Benutzer auf einfache Weise in Kundenbindungsaktionen und Loyalitätsprogramme eingebunden werden, die auch für den Benutzer selbst einen Mehrwert bieten.
In einer vorteilhaften Ausführungsform kann dem Benutzer eine Benutzerschnittstelle zu dem Computersystem bereitgestellt werden, über welche dem Benutzer ein Zugriff auf eine Benutzerkonfigurationsumgebung für zumindest eine Teilmenge der mit dem Benutzer verknüpften Daten in der Benutzerdatenbank ermöglicht wird. Dadurch kann mit jedem Benutzer ein direkter Kontakt hergestellt werden und es lassen sich komplexe Community-Features verwirklichen, die gegebenenfalls auch mit den Systemen des Produktanbieters über Schnittstellen verknüpft werden können.
In vorteilhafter Weise kann die Benutzerkonfigurationsumgebung erfindungsgemäß über die Konfigurationsumgebung zumindest teilweise vom Produktanbieter konfigurierbar sein.
Dadurch kann für den Benutzer der Eindruck geschaffen werden, dass er über die Benutzerkonfigurationsumgebung direkt mit dem Produktanbieter in Kontakt ist. Dies ist vorteilhaft, da Endbenutzer im Allgemeinen keinen Kontakt mit dem Verpackungsmaterialhersteller haben, sondern mit dem Hersteller der von ihnen erworbenen Produkte kommunizieren wollen.
In einer weiteren vorteilhaften erfindungsgemäßen Ausführungsform kann das Computersystem dem Produktanbieter einen Zugriff auf in der Benutzerdatenbank gespeicherte Daten ermöglichen. Dies erlaubt dem Produktanbieter eine Auswertung des Benutzerverhaltens. Gegebenenfalls können die in der Benutzerdatenbank gespeicherten Daten über entsprechende Schnittstellen direkt in ein Kundenverwaltungsprogramm des Produktanbieters übertragen werden. Gegebenenfalls können die Daten auch als Datei für einen Download bereitgestellt werden.
In vorteilhafter Weise kann das Computersystem aus den in der Benutzerdatenbank gespeicherten Daten personalisierte und/oder anonymisierte Statistikdaten erstellen und gegebenenfalls für einen Zugriff über die Konfigurationsumgebung bereitstellen. Anstelle von unübersichtlichen Rohdaten können dem Produktanbieter dadurch bereits vorbearbeitete und gegebenenfalls aggregierte Statistikdaten, beispielsweise in der Art von Key-Performance-Indikatoren, erstellt werden, die eine schnelle Übersicht und einfache Auswertbarkeit ermöglichen.
In einer weiteren vorteilhaften Ausführungsform können Statistikdaten in graphischer Darstellung bereitgestellt werden. Dies erleichtert die Datenanalyse insbesondere für Produktanbieter, deren eigene Computersysteme nicht über geeignete Datenanalyse- und Datendarstellungstools verfügen.

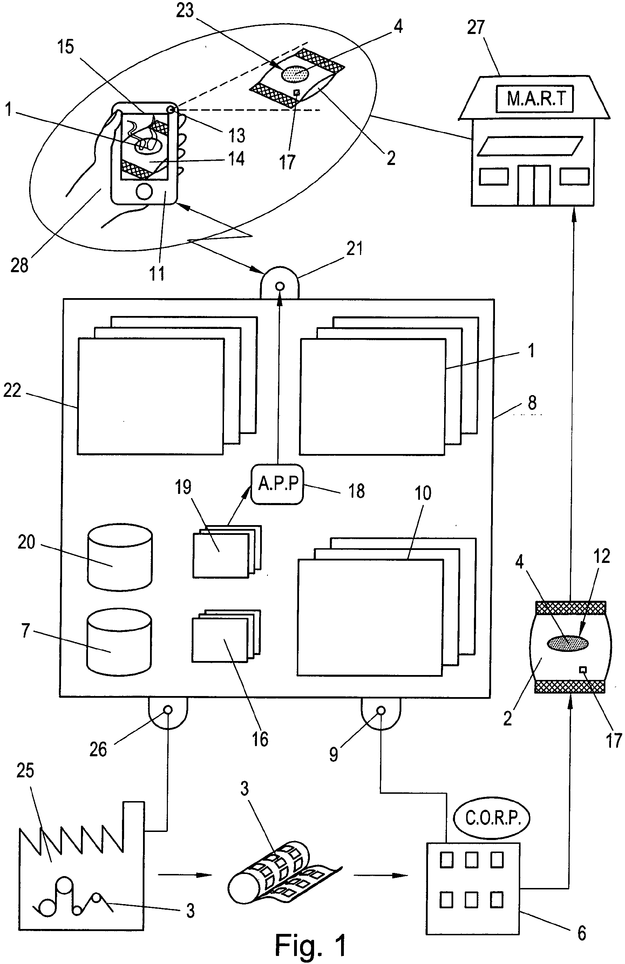

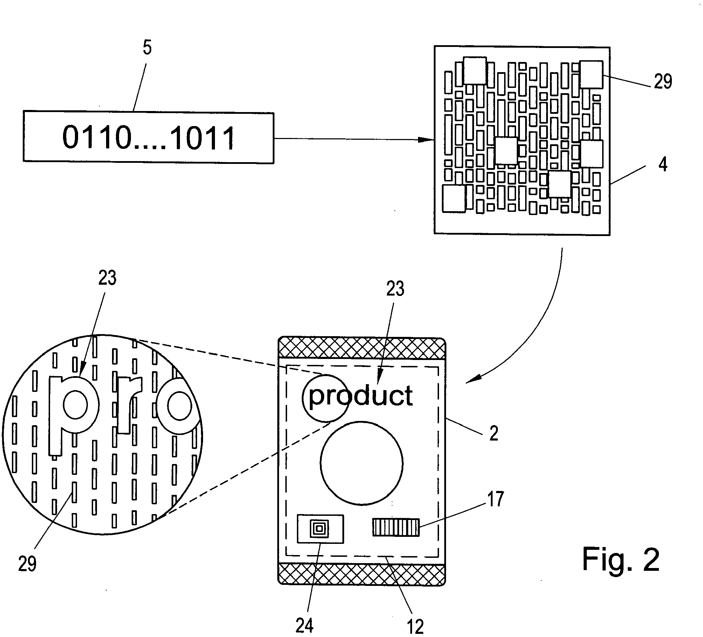

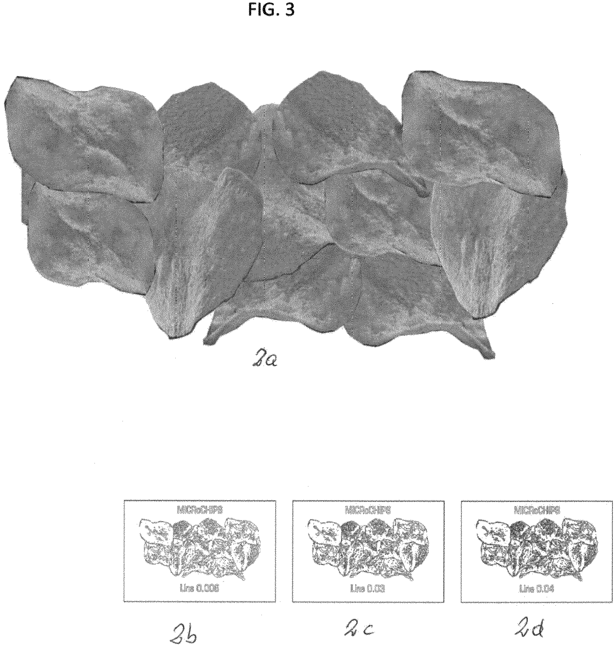

Die Erfindung wird nachfolgend unter Bezugnahme auf die Figuren 1 und 2 näher erläutert, die beispielhaft, schematisch und nicht einschränkend vorteilhafte Ausgestaltungen der Erfindung zeigen. Dabei zeigt
Fig.1 eine schematische Darstellung von am erfindungsgemäßen Verfahren beteiligten Einheiten und
Fig. 2 eine schematische Darstellung einer mit Identifikationsobjekten versehenen Produktverpackung.
Fig. 3 zeigt das Sicherheitsmerkmal, das als fraktales Halbtonbild vorliegt.

Vorteilhafte Ausführungsformen des erfindungsgemäßen Verfahrens werden im Folgenden unter Bezugnahme auf Fig. 1 beispielhaft beschrieben. Die Darstellung wurde auf die wesentlichen Darstellungselemente reduziert, die zur Erläuterung des erfindungsgemäßen Verfahrens erforderlich sind.
Aus der Sicht eines Benutzers 28, der mit einer Kamera 13 eines Endbenutzergeräts 11 eine Produktverpackung 2 aufnimmt, wird auf einem Display 15 des Endbenutzergeräts 11 zusammen mit der aufgenommenen Produktverpackung 2 das Sicherheitsmerkmal 1 angezeigt. Der Benutzer 28 kann die Produktverpackung 2 beispielsweise in einem Regal oder einer Auslage einer Verkaufsstelle 27, beispielsweise einem Laden oder Supermarkt, in dem das mit der Produktverpackung 2 verpackte Produkt angeboten wird, mit der Kamera 13 aufnehmen.
Das Sicherheitsmerkmal 1, das als fraktales Halbtonbild vorliegt, kann Informationen über die Identität des Produkts, die Charge aus der das Produkt stammt, das vorgesehene Land des Inverkehrbringens, Informationen zu Inhaltsstoffen, Allergenen, Herstellungs- und/oder Ablaufdatum und/oder dergleichen hinterlegt haben.

Das Sicherheitsmerkmal 1 kann vorzugsweise so am Display 15 angezeigt werden, dass er für den Benutzer 28 als Teil oder Ergänzung der Produktverpackung 2 erscheint.
Beispielsweise kann die Produktverpackung 2 Logos, Elemente einer Verpackungsbedruckung 23 und/oder Formelemente enthalten, die als Orientierungsmarkierungen verwendet werden können, um die Darstellung der Sicherheitsmerkmals 1 auf die Ausrichtung der aufgenommenen Produktverpackung 2 auszurichten und anzupassen. Beispielsweise kann die Produktverpackung 2 eine oder mehrere definierte Positionsmarke 17 aufweisen, die verwendet werden können, um die Position und Ausrichtung der Produktverpackung 2 automatisch erkennen und auswerten zu können.

Der Vergleich und Abgleich des Sicherheitsmerkmals 1 werden von einer am Endbenutzergerät 11 laufenden Softwareanwendung durchgeführt und gesteuert, die im Folgenden als Computerprogrammprodukt 18 bezeichnet wird. Das Computerprogrammprodukt 18 kann von einem Server heruntergeladen und auf dem Endbenutzergerät 11 vom Benutzer 28 oder automatisch gestartet werden und beispielsweise im Hintergrund laufen, wobei laufend geprüft wird, ob in dem von der Kamera 13 gerade aufgenommene Aufnahmebild 14 eine Produktverpackung 2 erkannt wird, für die ein Sicherheitsmerkmal 1 verfügbar ist.
Die Programmierung und Umsetzung des Computerprogrammprodukts 18 und die Anpassung dieses Computerprogrammprodukts 18 auf bestimmte Endbenutzergeräte 11 ist einem Durchschnittsfachmann bei Kenntnis der hierin offenbarten Lehren mit herkömmlichen programmiertechnischen Maßnahmen möglich. Für die Umsetzung der einzelnen Schritte (z.B. Erkennung der Verpackung, Überlagerung des Aufnahmebildes) können beispielsweise im Handel angebotene vorgefertigte Lösungen verwendet und entsprechend angepasst werden. Auf die Erstellung und Bereitstellung des Computerprogrammprodukts 18 wird untenstehend nochmals detaillierter eingegangen.

Ein Produkt kann beispielsweise von einem Produktanbieter 6 nach der Herstellung (oder Zulieferung durch Dritte) in der Produktverpackung 2 verpackt und über herkömmliche Vertriebskanäle an die Verkaufsstelle 27 geliefert werden. Das für die Produktverpackung 2 verwendete Verpackungsmaterial 3 wird üblicherweise nicht vom Produktanbieter 6 selbst, sondern von einem Verpackungsmaterialhersteller 25 hergestellt. Das Verpackungsmaterial 3 ist auf die Verpackungsmaschinen des Produktanbieters 6 abgestimmt und kann beispielsweise ein Folienmaterial für Beutelverpackungen, ein Kartonmaterial für Überverpackungen oder Schachteln, ein Deckelmaterial für Becher oder Trays, ein Etikettenmaterial oder Ähnliches sein. Gegebenenfalls kann das Verpackungsmaterial 3 zur Herstellung der Produktverpackung 2 mit anderen Verpackungselementen kombiniert werden.

Üblicherweise umfasst eine Einheit des Verpackungsmaterials 3 (also beispielsweise eine Rolle an Folienmaterial für Beutelverpackungen) das Material für zahlreiche Produktverpackungen 2.
Die Produktverpackung 2 wird (üblicherweise vom Hersteller des Verpackungsmaterials mit dem Sicherheitsmerkmal 1 versehen.

Fig. 2 zeigt die Produktverpackung 2, die zumindest in einem Darstellungsbereich 12 mit einer Verpackungsbedruckung 23 versehen ist. In die Verpackungsbedruckung 23 ist das Sicherheitsmerkmal 1 eingebettet, das, wie oben beschrieben durch die Wahl des Motivs und die individuelle Wahl der Schwellenwerte im Druckverfahren Informationen über Identität, Authentizität, sowie produkt- und/oder herstellerbezogene Daten darstellt. Auch wenn das Sicherheitsmerkmal 1 mit freiem Auge nur schwer oder gar nicht erkennbar ist, kann es mit entsprechenden Algorithmen aus dem mit dem Endbenutzergerät 11 aufgenommenen Aufnahmebild 14 ausgelesen werden.
Es können auch mehrere unterschiedliche Sicherheitsmerkmale kombiniert angewendet werden, etwa um komplexere Sicherheitsmerkmale umzusetzen. Auf der Verpackungsbedruckung 23 der Produktverpackung 2 kann auch die Positionsmarke 17 angeordnet sein, wobei als Positionsmarke 17 ein markanter Bildbestandteil vorteilhaft ist, der auch unter weniger günstigen Lichtbedingungen gut erkennbar ist. Als Positionsmarke 17 kann auch ein Bildelement genutzt werden, das aus anderen Gründen auf der Produktverpackung vorgesehen sein muss, etwa ein Handelsstrichcode, wie etwa eine European Article Number oder ein Universal Product Code. Vorzugsweise erlaubt die Positionsmarke 17 aufgrund ihrer Form eine Bewertung des Aufnahmewinkels, um die korrekte Positionierung des Sicherheitsmerkmals 1 im Display 15 zu erleichtern.
Alternativ können auch Produktverpackungen 2 hergestellt werden, die für jede einzelne Produktverpackung (d.h. für jedes einzelne Produkt) ein einzigartiges Sicherheitsmerkmal 1 aufweisen. Dadurch kann beispielsweise bei höherpreisigen Produkten eine Rückverfolgung des Lebenszyklus der einzelnen Produktverpackung (und somit auch des einzelnen Produkts) ermöglicht werden. Das Computersystem 8 wird vom Verpackungsmaterialhersteller 25 erstellt und gewartet, sodass der Produktanbieter 6 diese Infrastruktur nutzen kann, ohne sich um die Details der technischen Umsetzung kümmern zu müssen. Dies ermöglicht auch verhältnismäßig kleinen Produktanbietern ohne entsprechende technische Infrastruktur Sicherheitsmerkmale 1 mit den entsprechenden bereits dargestellten Informationen für ihre Produkte anzubieten.
In der Produktdatenbank 7 sind auch Informationen über die Form der Produktverpackung 2, über deren Verpackungsbedruckung 23 und das darin enthaltene Sicherheitsmerkmal 1 und/oder Positionsmarke(n) 17 und gegebenenfalls Produktergänzungstemplates 16 gespeichert. Solche Produktergänzungstemplates können beispielsweise Augmented-Reality-Objekte umfassen. Als "Augmented-Reality-Objekte" werden virtuelle, graphisch darstellbare und gegebenenfalls animierte Produktergänzungen bezeichnet, die in einer Weise in die Darstellung des Aufnahmebildes eingebettet werden, dass sie, obwohl sie in der realen Umgebung nicht existieren, im Bild als Teil der realen Aufnahme dargestellt werden. Weitere Produktergänzungstemplates können beispielsweise Gewinnspiele, Kundenbindungsaktionen, Loyalitätsprogramme und dergleichen sein, die auch für den Benutzer selbst einen Mehrwert darstellen.

In Figur 3 ist ein fraktales Halbtonbild, das als Sicherheitselement dient, dargestellt.
Dabei zeigt Fig. 2a das Originalbild, das in diesem Fall aus eine Ansammlung von Kartoffelchips darstellt. Die Figuren 2b, 2c und 2d zeigen fraktale Halbtonbilder, die aus dem Originalbild hergestellt wurden.
Dabei wurden unterschiedliche Linienstärken definiert.
Für das Bild in Figur 2b wurde eine Linienstärke von 0.006 mm, für das Bild in Fig. 2c eine Linienstärke von 0,03 mm und für das Bild in Figur 2d eine Linienstärke von 0,04 mm definiert.
Es können auch andere Linienstärken definiert werden, beispielsweise eine Linienstärke von 0,060 mm.

In einer vorteilhaften Ausführungsform kann dem Benutzer eine Benutzerschnittstelle zu dem Computersystem bereitgestellt werden, über welche dem Benutzer ein Zugriff auf eine Benutzerkonfigurationsumgebung für zumindest eine Teilmenge der mit dem Benutzer verknüpften Daten in der Benutzerdatenbank ermöglicht wird. Dadurch kann mit jedem Benutzer ein direkter Kontakt hergestellt werden und es lassen sich komplexe Community-Features verwirklichen, die gegebenenfalls auch mit den Systemen des Produktanbieters über Schnittstellen verknüpft werden können.

In vorteilhafter Weise kann die Benutzerkonfigurationsumgebung erfindungsgemäß über die Konfigurationsumgebung zumindest teilweise vom Produktanbieter konfigurierbar sein. Dadurch kann für den Benutzer der Eindruck geschaffen werden, dass er über die Benutzerkonfigurationsumgebung direkt mit dem Produktanbieter in Kontakt ist. Dies ist vorteilhaft, da Endbenutzer im Allgemeinen keinen Kontakt mit dem Verpackungsmaterialhersteller haben, sondern mit dem Hersteller der von ihnen erworbenen Produkte kommunizieren wollen.

In einer weiteren vorteilhaften erfindungsgemäßen Ausführungsform kann das Computersystem dem Produktanbieter einen Zugriff auf in der Benutzerdatenbank gespeicherte Daten ermöglichen. Dies erlaubt dem Produktanbieter eine Auswertung des Benutzerverhaltens. Gegebenenfalls können die in der Benutzerdatenbank gespeicherten Daten über entsprechende Schnittstellen direkt in ein Kundenverwaltungsprogramm des Produktanbieters übertragen werden. Gegebenenfalls können die Daten auch als Datei für einen Download bereitgestellt werden.

In vorteilhafter Weise kann das Computersystem aus den in der Benutzerdatenbank gespeicherten Daten personalisierte und/oder anonymisierte Statistikdaten erstellen und gegebenenfalls für einen Zugriff über die Konfigurationsumgebung bereitstellen. Anstelle von unübersichtlichen Rohdaten können dem Produktanbieter dadurch bereits vorbearbeitete und gegebenenfalls aggregierte Statistikdaten, beispielsweise in der Art von Key-Performance-Indikatoren, erstellt werden, die eine schnelle Übersicht und einfache Auswertbarkeit ermöglichen.

In einer weiteren vorteilhaften Ausführungsform können die die Statistikdaten in graphischer Darstellung bereitgestellt werden. Dies erleichtert die Datenanalyse insbesondere für Produktanbieter, deren eigene Computersysteme nicht über geeignete Datenanalyse- und Datendarstellungstools verfügen.

In vorteilhafter Weise können über die Konfigurationsumgebung Produktergänzungstemplates auswählbar sein, welche über die Konfigurationsumgebung zu virtuellen Produktergänzungen konfigurierbar sind. Dies ermöglicht einerseits die Verwendung desselben Produktergänzungstemplates für mehrere unterschiedliche Produktverpackungen und gegebenenfalls auch für unterschiedliche Produktanbieter, andererseits wird dem Produktanbieter die Erzeugung von Produktergänzungen erheblich erleichtert, da er auf vorgefertigte Bausteine (eben Produktergänzungstemplates) zurückgreifen kann.

Diese Informationen sind dem Verpackungsmaterialhersteller 25 bekannt und üblicherweise auch in computerverarbeitbarer Form in der Unternehmens- bzw. Produktionssoftware verfügbar und können über die Herstellerschnittstelle 26 automatisch oder nach Bedarf in die Produktdatenbank 7 eingepflegt werden.

### Bezugszeichen:

Sicherheitsmerkmal 1
Produktverpackung 2
Verpackungsmaterial 3
Produktanbieter 6
Produktdatenbank 7
Computersystem 8
Produktanbieterschnittstelle 9
Konfigurationsumgebung 10
Endbenutzergerät 11
Darstellungsbereich 12
Kamera 13
Aufnahmebild 14
Display 15
Produktergänzungstemplates 16
Positionsmarke 17
Computerprogrammprodukt 18
Computerprogrammprodukttemplates 19
Benutzerdatenbank 20
Benutzerschnittstelle 21
Benutzerkonfigurationsumgebung 22
Verpackungsbedruckung 23
Transponder 24
Verpackungsmaterialhersteller 25
Herstellerschnittstelle 26
Verkaufsstelle 27
Benutzer 28
graphisch darstellbarer Code 29

## Patentansprüche

1. Verfahren zur Identifizierung, Echtheitsüberprüfung und Nachverfolgung von Produktverpackungen, **gekennzeichnet durch** folgende Schritte:
a) Herstellen von Verpackungsmaterial für zumindest eine Produktverpackung, die mit einem Sicherheitsmerkmal versehen werden kann,
b) Ausgestalten des Verpackungsmaterials an zumindest einem für die Herstellung der Produktverpackung vorgesehenen Bereich des Verpackungsmaterials mit zumindest einem Sicherheitsmerkmal, das die Identifizierung, Authentifizierung und Nachverfolgung der Produktverpackung durch ein Endbenutzergerät ermöglicht, wobei das Sicherheitsmerkmal ein für den Produktanbieter individualisiertes fraktales Halbtonbild mit Produktidentifikationsdaten, wie Informationen über zumindest die Identität, Authentizität, sowie Informationen über den bestimmungsgemäßen Produktlauf, darstellt;
c) Bereitstellen des Verpackungsmaterials zur Fertigstellung der Produktverpackung und Befüllung durch einen Produktanbieter;
d) Speichern der mit der Produktverpackung verknüpften Produktidentifikationsdaten in einer Produktdatenbank eines Computersystems;
e) Bereitstellen einer Produktanbieterschnittstelle zu dem Computersystem, über welche dem Produktanbieter ein Zugriff auf eine Konfigurationsumgebung für das Sicherheitsmerkmal ermöglicht wird;
e) Anpassen zumindest des für den Produktanbieter konfigurierten Sicherheitsmerkmals für eine Verwendung durch das Endbenutzergerät; Bereitstellen eines von dem Endbenutzergerät ausführbaren Computerprogrammprodukts zum Herunterladen von dem Computersystem auf das Endbenutzergerät, wobei das auf dem Endbenutzergerät ausgeführte Computerprogrammprodukt dem Endbenutzergerät die folgenden Schritte ermöglicht:
f) Identifizieren der Produktverpackung, wenn sich das Sicherheitsmerkmal in einem Auslesebereich des Endbenutzergerätes befindet,
g) Ermitteln und gegebenenfalls Herunterladen des für die identifizierte Produktverpackung bereitgestellten Sicherheitsmerkmals,
h) Detektieren eines an der fertiggestellten Produktverpackung sichtbaren Darstellungsbereichs der Produktverpackung in einem mit einer Kamera des Endbenutzergeräts aufgenommenen Aufnahmebild, wenn sich die Produktverpackung im Aufnahmebereich der Kamera befindet,
i) Überlagern des mit der Kamera des Endbenutzergeräts aufgenommenen Aufnahmebildes mit dem Sicherheitsmerkmal
und
j) Vergleich und Abgleich des Aufnahmebildes mit den gespeicherten Informationen des Sicherheitsmerkmals.

2. Verfahren nach Anspruch 1 **dadurch gekennzeichnet, dass** zumindest ein Sicherheitsmerkmal ein fraktales Halbtonbild ist.

3. Verfahren nach Anspruch 2, **dadurch gekennzeichnet, dass** das fraktale Halbtonbild als Strichbild vorliegt.

4. Verfahren nach einem der Ansprüche 1 bis 3, **dadurch gekennzeichnet, dass** das fraktale Halbtonelement definiert ist durch einen Schwellenwert zur Volltondarstellung als Obergrenze und einen Schwellenwert zu weiß als Untergrenze.

5. Sicherheitselement nach Anspruch 4, **dadurch gekennzeichnet, dass** der Schwellenwert in den Bereich der Hauptmodulation gelegt wird.

6. Verfahren nach einem der Ansprüche 1 bis 5, **dadurch gekennzeichnet, dass** die Linienstärke des als Strichbild vorliegenden fraktalen Halbtonbilds zwischen 0,006 und 0,04 mm liegt.

7. Verfahren nach einem der Ansprüche 1 bis 6, **dadurch gekennzeichnet, dass** das fraktale Halbtonbild produkt- und/oder herstellerbezogene Daten codiert.

8. Verfahren nach einem der Ansprüche 1 bis 7, **dadurch gekennzeichnet, dass** das fraktale Halbtonbild variable Daten, wie Chargeninformationen, Herstell- oder Ablaufdatum des Produkts codiert.

9. Verfahren nach einem der Ansprüche 1 bis 9, **dadurch gekennzeichnet, dass** die Produktverpackung Produktergänzungstemplates aufweist.

10. Verfahren nach einem der Ansprüche 1 bis 9, **dadurch gekennzeichnet, dass** bei der Herstellung des Verpackungsmaterials an dem für die Herstellung der Produktverpackung vorgesehenen Bereich des Verpackungsmaterials zumindest eine Positionsmarke erzeugt wird, die im Darstellungsbereich der fertiggestellten Produktverpackung angeordnet ist.

11. Verfahren nach einem der Ansprüche 1 bis 10, **dadurch gekennzeichnet, dass** das Computerprogrammprodukt für das Endbenutzergerät über die Konfigurationsumgebung vom Produktanbieter konfigurierbar ist.
